Europäisches Patentamt

European Patent Office

Office européen des brevets

(11) Publication number: **0 430 412 A2**

## (12) EUROPEAN PATENT APPLICATION

(21) Application number: **90311098.9**

(22) Date of filing: **10.10.90**

(51) Int. Cl.⁵: **G06M 1/34**

(30) Priority: **30.10.89 US 428551**

(43) Date of publication of application:
**05.06.91 Bulletin 91/23**

(84) Designated Contracting States:
**DE FR GB IT Bulletin 00/2**

(71) Applicant: **DELCO ELECTRONICS CORPORATION**
**700 East Firmin Street**

Kokomo Indiana 46902(US)

(72) Inventor: **Bleicher, William L.**
**5408 Brookwood Drive**
**Burton, Michigan 48509(US)**

(74) Representative: **Denton, Michael John et al**
**Patent Section Vauxhall Motors Limited 1st**
**Floor Gideon House 26 Chapel Street**
**Luton Bedfordshire LU1 2SE(GB)**

(54) **Gearing for reset trip odometer.**

(57) Geared drive for reset trip odometer in which a transfer tooth (90) on each of the rotatable odometer wheels (12,14) is immediately ahead of a tooth space (84) in a circular track (86) on the odometer wheels for tracking wide pinion teeth (80) of the associated transfer pinion gear (38-42) and laterally clear of narrow pinion teeth (82). With the wide pinion teeth normally riding on the track of the odometer wheel, there is a gear locking action if a reverse drive occurs to limit wheel droop from a reference line and anti-locking action when reset is attempted so that the odometer wheels can be forwardly driven to record trip distances.

FIG. 2

EP 0 430 412 A2

## GEARING FOR RESET TRIP ODOMETER

This invention relates to reset trip odometers, and more particularly to gearing interconnecting the odometer input drive with the odometer numeral wheels which locks in one direction of wheel rotation to minimize odometer wheel droop and which is anti-locking in the opposite direction to prevent wheel lock-up after reset to allow travel distances to be registered.

Prior to the present invention, odometers have been utilized with vehicles to register distances travelled. Such odometers have various reset devices, as, for example, shown in US Patent No 3,773,254, which allow the operator to reset the odometer to a start position at the completion of a trip so that a following trip distance can be registered. In some of these prior devices, a lock-up condition between the odometer wheels and the selectively releasable transfer gearing can occur if the reset device is released before full stroke for reset, and the transfer gearing returns to a gear engaging position. When the transfer and odometer wheel gearing become interlocked, the odometer wheels cannot turn to register travel distance.

Such interlocking can be cleared by fully stroking the reset device to move the transfer gearing away from the odometer wheel gearing while turning the odometer wheels so that they all register zero with respect to a reference line usually the display window in the vehicle instrument panel. In this position, the transfer gearing is in proper alignment with the odometer wheel gearing which are brought into operative mesh by a return spring when the operator releases the reset device. While this provides a correction, interlocking may again occur with another incomplete stroke of the reset device and with certain rotary positions of the odometer wheels.

In addition to lock up of the gearing in the odometer, odometer wheel droop may occur after proper reset to the zero position. This results from lash in the gearing, and any number or all of the odometer wheels may turn a limited amount in one direction so that the zero numerals are not properly aligned, and may turn below the level of the display window so that other numerals are visible.

A reset trip odometer in accordance with the present invention is characterised over the prior art by the features specified in the characterising portion of claim 1.

To eliminate reset lock-up and to allow the accurate recording of trip distances, the present invention incorporates a new and improved gear arrangement which effectively transmits the drive between the transfer gearing and odometer wheels and which allows the reset to be fully or partially accomplished with consistent return of the transfer gearing into drive gear arrangements without lock-up. This arrangement allows the gears to transmit the drive even when reset was not fully completed and optimizes accurate registration of distances travelled.

To prevent odometer wheel droop, this invention provides effective lock up between the transfer gearing and the odometer wheel gearing and wide tooth tracks on the odometer wheels so that the odometer wheels cannot significantly droop by rotating in one direction and will maintain alignment in the viewing window.

It is, therefore, an object of this invention to provide a reset trip odometer wherein lock-up is always prevented in the forward direction.

It is another object of this invention to provide a reset trip odometer wherein wheel droop is minimized in the display window.

It is another object of this invention to provide a reset trip odometer wherein the subtraction of distance is minimized should the input drive be reversed.

It is another object of this invention to provide a selectively releasable drive gear arrangement in a trip odometer which prevents transfer gear lock up as a result of odometer reset action so that the odometer wheels will always turn to accumulate units of measured distance.

It is another object of this invention to provide a gear drive arrangement for an odometer that advantageously utilizes the gearing to positively limit the odometer wheel rotation in a first direction relative to a start up reference line after a reset so that the numbers thereon remain substantially in line and are ready to rotate in an opposite direction to record distances travelled by a vehicle.

It is another object of this invention to provide a reset trip odometer with selectively releasable drive gearing drivingly connecting the odometer input to the odometer wheels which minimizes wheel rotation in a direction that would reduce accumulated units of measured distance.

The present invention will now be described, by way of example, with reference to the following detailed description, and the accompanying drawings, in which:-

Figure 1 is a pictorial view of a portion of a reset trip odometer for an automotive vehicle;

Figure 2 is an exploded view of a portion of the reset trip odometer of Figure 1;

Figure 3 is an elevational view of a portion of the reset trip odometer of Figure 1 with parts removed;

Figure 4 is a side view of a portion of the reset trip odometer of Figure 1 with parts removed; and

Figure 5 is a fragmentary side view of a prior art odometer with the transfer gearing and odometer wheel in a locked-up condition.

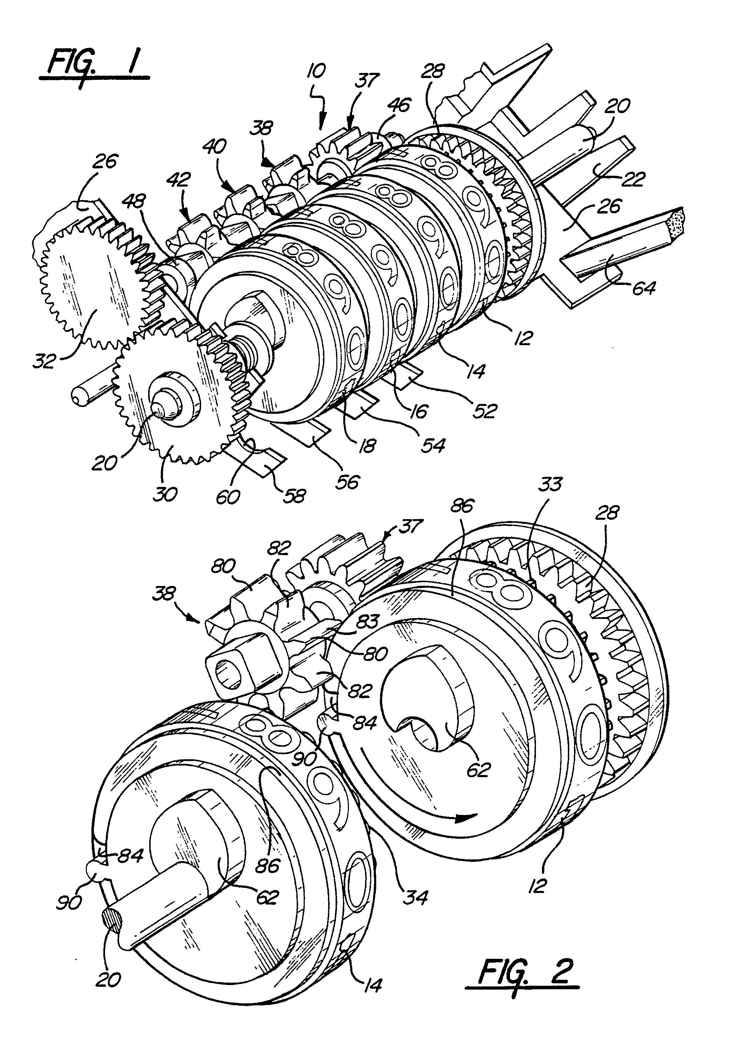

Turning now to Figure 1 there is shown a reset trip odometer 10 for a vehicle, not shown, having a plurality of conventionally numbered odometer wheels 12, 14, 16 and 18 mounted for rotation on a drive shaft 20 supported by laterally spaced forks 22, 24 of a support bracket 26. Mounted fast to the drive shaft 20 to the sides of odometer wheels 12 and 18, respectively, are inboard spur gear 28 and outboard spur gear 30. Outboard spur gear 30 meshes with and is rotatably driven by an input spur gear 32 which is rotatably driven by a stepper motor energized by signals generated by the vehicle power transmission output and a sender associated therewith, which are not shown. Outboard spur gear 30 rotatably drives shaft 20 and thereby rotates the inboard spur gear 28. Drivingly interconnecting the inboard spur gear 28 to annular gears (odometer wheel gear means) 33, 34, 35 and 36 formed in the inboard peripheral edges of each of the odometer wheels 12-18 is a gang of four (laterally spaced) transfer pinion gears 37, 38, 40 and 42 that respectively mesh with annular gears 33, 34, 35 and 36. These transfer pinion gears 37-42 are mounted for rotation on an (elongated) pinion shaft 44 which is secured to the ends of (laterally spaced) arms 46 and 48 of an odometer pinion carrier 47 that is pivotably mounted to the support bracket 26 by a pivot shaft 50. Pinion shaft 44, pinion carrier 47 and pivot shaft 50 thereby define supporting means for the transfer pinion gears 37-42. In addition to arms 46, 48 extending from the pivot shaft 50 to one side of the odometer wheels 12-18 for support of the pinion shaft 44 and transfer pinion gears 37-42, the pinion carrier 47 has four (laterally spaced) reset arms 52, 54, 56 and 58 extending to the other side of the odometer wheels 12-18, each of which has a profile cam actuator surface 60 adjacent to the free end thereof for engaging respective heart shaped cams 62 fixed to the side of each odometer wheel 12-18 and, where required, turning the odometer wheels back to their zero or start positions aligned and centred in a display window in the vehicle instrument panel, not shown, so that they are ready to record distances from the start of another vehicle trip. A torsion spring 61 biases arms 46, 48 so that the transfer pinion gears 37-42 engage the annular gears 33-36 on the odometer wheels 12-18 and the reset arms 52-58 are away from the heart-shaped cams 62. Compression spring assembly 63 mounted on drive shaft 20 between support bracket 26 and odometer wheel 18 urges the odometer wheels in an inboard direction to keep the gears in mesh.

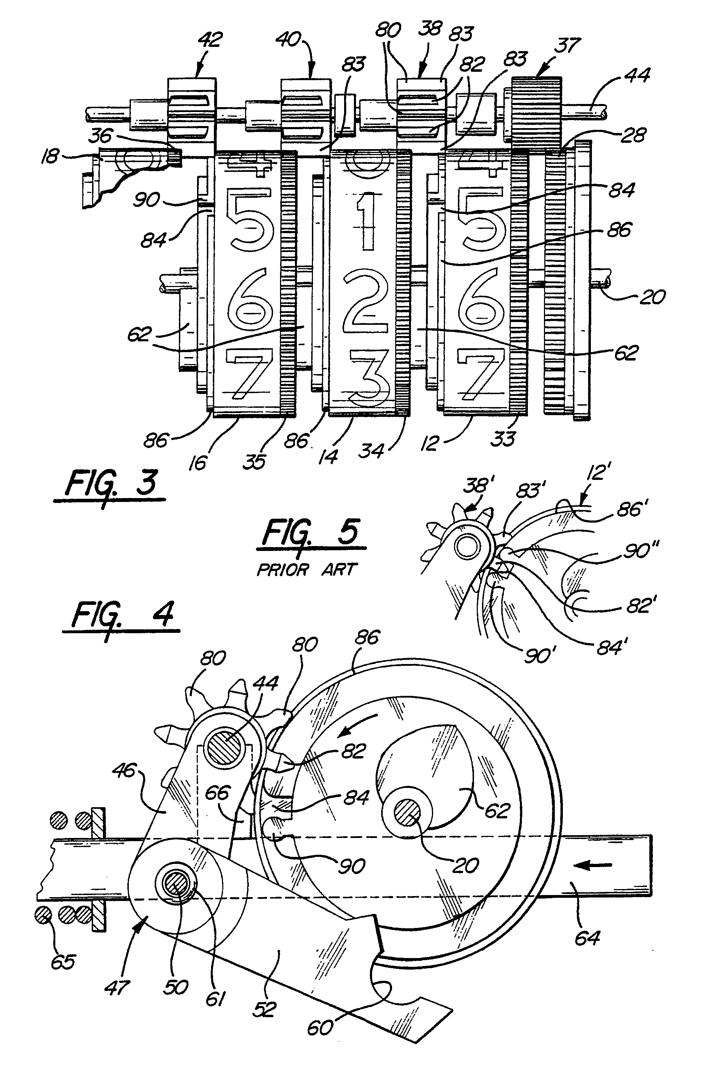

Reset is accomplished by manually depressing a reset stem 64 against the force of spring 65 which moves an attached fork 66 linearly in the direction that the reset stem is stroked. The inboard end of pinion shaft 44 is trapped by the attached fork 66 so that arms 46, 48 are turned counterclockwise in particular reference to Figure 4 and the gang of transfer pinion gears 37, 38, 40 and 42 are simultaneously swung from engagement with the annular gears 33-36 of the odometer wheels 12-18. As this pinion gear disengagement takes lace, the profile cam actuator surfaces 60 of the reset arms 52-58 engage the heart-shaped cams 62 to reset the associated odometer wheel 12-18 by turning them on drive shaft 20 where necessary backward or forward to the zero position.

Transfer pinion gear 37 meshes with inboard spur gear 28 on drive shaft 20 and the adjacent annular gear 33 on odometer wheel 12 and transmits the rotary drive from inboard spur gear 28 to the first odometer wheel 12. Inboard and outboard spur gears 28, 30, input spur gear 32, and transfer pinion gear 37 thereby define gear means for rotatably driving odometer wheel 12. The transfer pinion gears (transfer gear means) 38, 40, 42 which drivingly interconnect the odometer wheels 12-18 are substantially identical in structure and each has wide (long) pinion teeth 80 (wide tooth means) that extend across the entire width of the body of the transfer pinion gear which alternate with narrow (short) pinion teeth 82 (narrow tooth means) that extend from one edge in an inboard direction to terminate short of the opposite edge.

As shown best in Figure 3, inboard edges 83 of the wide pinion teeth 80 are adapted to ride on a circular rim or wide tooth track 86 (annular track means) on an associated odometer wheel 12-16 which is interrupted only by a radially and inwardly extending recess or tooth space 84 (tooth space means) formed between two adjacent end portions of the rim 86. The tooth space 84 also extends laterally only for the width of the rim 86 to receive only the inboard edges 83 of the wide pinion teeth 80 of the pinion gears 38-42 under certain operating conditions as will be described. Importantly, the tooth space 84 is clear of the narrow pinion teeth 82 of the pinion gear 38-42. In addition to the rim 86, each of the odometer wheels 12, 14, 16 have a transfer tooth 90 (transfer tooth means) which extends in a lateral direction therefrom as best shown in Figure 3. This transfer tooth 90 is adapted to rotate with the odometer wheel 12-16 and turn under the wide pinion tooth 80 of the associated pinion gear 38-42 and then contact the inboard edge of the narrow pinion tooth 82 of the pinion gear to turn the pinion gear so that the wide pinion tooth riding on rim 86 enters tooth space 84 to thereby turn the next adjacent odometer wheel constantly meshing with this transfer pinion gear through an arc equal to one numeral. This long tooth then turns out of the tooth space 84 while the following narrow pinion tooth 82 enters the space between the odometer wheels clear of the transfer tooth 90, and the next following wide pinion tooth 80 engages the rim 86 until this indexing action is repeated on the next complete rotation of the odometer wheel 12-16.

Assuming that the odometer wheels 12-18 are reset so that the numeral zero is displayed on each odometer wheel in the display window of the vehicle instrument panel and a trip is started, the inboard spur gear 28 turns to rotate the transfer pinion gear 37, which in turn drives the odometer wheel 12. One of the wide pinion teeth of transfer pinion gear 38 rides on the rim 86 of the odometer wheel 12, the transfer tooth 90 on the turning odometer wheel rides underneath this wide pinion tooth and engages the edge of the narrow pinion tooth 82 ex ending radially inward between odometer wheels 12 and 14 to turn the transfer pinion gear 38 so that the following wide pinion tooth turns down into the tooth space 84 and, accordingly, turns the next adjacent odometer wheel 14 1/10th of a turn. On continued rotation of odometer wheel 12, the engaged wide pinion tooth 80 leaves the tooth space 84 and the narrow pinion tooth 82 of the transfer pinion gear 38 enters into the space between the adjacent odometer wheels 12, 14 and the next wide pinion tooth 80 engages the rim 86 of the odometer wheel 12. The odometer wheel 14 stops as the transfer pinion gear 38 can no longer turn until the transfer tooth 90 again strikes the down narrow pinion tooth 82 to repeat an indexing of odometer wheel 14 through an arc so that the next numeral is displayed. This action continues and the rotary indexing takes place through each odometer wheel until the numerals 9999 are displayed unless previously reset.

Figure 4 illustrates odometer wheel 12-16 rotation after the reset stem 64 has been depressed and the transfer pinion gears 38-42 have been returned to an operating position. The odometer wheel 12-16 has slightly rotated counterclockwise to show that the narrow pinion tooth 82 on the transfer pinion gear 38-42 is not trapped in tooth space 84. If narrow pinion tooth 82 were so caught, the odometer wheel 12-16 could not turn because the wide pinion tooth 80 bears against rim 86. Such a lock-up condition is shown in the prior art construction of Figure 5 in which narrow pinion tooth 82′ is within the tooth space 84′ between two laterally extending transfer teeth 90′ and 90″. This odometer wheel 12′ cannot rotate counterclockwise to the wheel position of Figure 4 because it is locked up since the wide pinion tooth 83′ of the transfer pinion gear 38′ contacts the rim 86′. Accordingly, this and the rest of the odometer wheels cannot rotate to measure distances travelled.

If the prior art odometer wheel of Figure 5 were accurately reset to zero, the wide pinion teeth 83′ would be riding on the rim 86′, the narrow pinion tooth 82′ would be behind the front transfer tooth 90″, and the numeral in the instrument panel would indicate zero. Because of lash in the gearing system, the odometer wheel can droop so that the zero falls from the viewing window. As the odometer wheel droops and turns clockwise, no lock-up can occur in the gearing to limit odometer wheel rotation, as the odometer simply runs backward and may continue to do so if the polarity of the stepper motor becomes reversed. In contrast, in the present invention, odometer wheel droop is reduced since lock-up would occur in a clockwise direction since the single transfer tooth 90 will turn counterclockwise to hit the narrow pinion tooth 82 between the odometer wheels 12-16 and the wide pinion tooth 80 will contact the rim 86 to effect the desired lock-up to prevent further reverse operation.

## Claims

1. A reset trip odometer (10) having at least a pair of odometer wheels (12,14) laterally arranged with a space therebetween, and operatively mounted for rotation in a first direction on a shaft (20) extending through the odometer wheels; gear means (28,30,32,37) for rotatably driving a first (12) of the odometer wheels; odometer wheel gear means (34) associated with a second (14) of the odometer wheels; and transfer gear means (38) for drivingly interconnecting the first and second odometer wheels; supporting means (44,47,50) supporting the transfer gear means for movement between a first position in which the transfer gear means is in operative engagement with the odometer wheels and a second position in which the transfer gear means is displaced from operative engagement with the odometer wheels for resetting the odometer wheels; the transfer gear means having a plurality of arcuately spaced and alternating wide and narrow tooth means (80,82) thereon; characterised by annular track means (86) on the first (12) of the odometer wheels in sliding contact with a contact face portion of any of the wide tooth means (80) of the transfer gear means (38); by tooth space means (84) within the annular track means laterally offset with respect to all of the narrow tooth means (82) for receiving an end portion of any of the wide tooth means; and by transfer tooth means (90) rotationally ahead of the tooth space means and offset from the annular track means for engaging a face portion of the narrow tooth means so that the transfer gear means rotates to turn the second odometer wheel (14) in the first direction until the wide tooth means moves from the tooth space means and one of the narrow tooth means enters the space between the first and second odometer wheels and one of the wide tooth means engages the annular track means.

2. A reset trip odometer as claimed in claim 1, wherein the tooth space means (84) is laterally offset from any of the narrow tooth means (82) so that the narrow tooth means clear the tooth space means in any rotational position of the first odometer wheel (12) or the transfer gear means (38) to eliminate gear locking when the transfer gear means is returned from the second position to the first position.

3. A reset trip odometer as claimed in claim 1 or claim 2, wherein the transfer tooth means (90) is a unitary member extending laterally outwardly from the annular track means (86) to contact one of the tooth means (80,82) of the transfer gear means (38) when the first odometer wheel (12) begins turning in a direction opposite to the first direction to turn the transfer gear means and cause the transfer gear means to lock the first odometer wheel with one of the wide tooth means engaging the annular track means.

4. A reset trip odometer as claimed in any one of claims 1 to 3, wherein the annular track means comprises a rim (86) which extends in a circular path from a forward end portion to a terminal end portion, the terminal end portion being adjacent to the forward end portion to define the tooth space means therebetween.

FIG. 1

FIG. 2

FIG. 3

FIG. 5
PRIOR ART

FIG. 4